# EUROPÄISCHE PATENTANMELDUNG

(11) **EP 3 284 558 A1**
(43) Veröffentlichungstag der Anmeldung: **21.02.2018**
(21) Anmeldenummer: 17181706.7
(22) Anmeldetag: 17.07.2017
(51) Int. Cl.: B23P 15/10, B24B 19/02, B24B 19/00, B24B 27/00, B24D 5/06

(54) **VERFAHREN ZUR BEARBEITUNG EINES KOLBENS**

(30) Priorität: 16.08.2016 DE 102016215278
(71) Anmelder: Mahle International GmbH, 70376 Stuttgart (DE)
(72) Erfinder: MÜLLER, Reiner, 78628 Rottweil (DE)
(74) Vertreter: BRP Renaud & Partner mbB Rechtsanwälte Patentanwälte Steuerberater

(57) **Zusammenfassung**

Die vorliegende Erfindung betrifft ein Verfahren zur Bearbeitung eines Kolbens (1) einer Brennkraftmaschine, bei dem zumindest eine Ringnut (2) eingebracht wird.

Erfindungswesentlich ist hierbei, dass die zumindest eine Ringnut (2) ausschließlich durch Schleifen eingebracht wird.

Hierdurch lassen sich qualitativ hochwertige und äußerst schmale Ringnuten (2) kostengünstig herstellen.

## Beschreibung

Die vorliegende Erfindung betrifft ein Verfahren zur Bearbeitung eines Kolbens einer Brennkraftmaschine, bei dem zumindest eine Ringnut eingebracht wird, gemäß dem Oberbegriff des Anspruchs 1. Die Erfindung betrifft außerdem einen nach diesem Verfahren bearbeiteten Kolben.

Aus der DE 10 2009 027 647 A1 ist ein gattungsgemäßes Verfahren zur Bearbeitung eines Kolbens einer Brennkraftmaschine bekannt, bei dem zumindest eine Ringnut eingebracht wird. Um die Ringnut dabei möglichst verschleißbeständig machen zu können, wird in dieser eine Hartanodisierschicht aufgebracht und diese nachfolgend zumindest teilweise durch ein in die Nut eingeführtes, rotierendes Schleifwerkzeug geglättet. Hierdurch kann eine besonders glatte Nutoberfläche erzielt werden. Die eigentliche Nut in das Kolbenmaterial wird dabei üblicherweise zuvor mittels eines spanenden Verfahrens eingebracht.

Generell werden so genannte Kolbenringnuten bisher mechanisch durch Zerspanen hergestellt. Die Nuten werden dabei vorgestochen und anschließend an den Nutwänden, das heißt an den Ober- und Unterflanken, gedreht, um geforderte Toleranzen erfüllen zu können. Aufgrund von stetig schmaler werdenden Nuten, ist es erforderlich, auch die hierfür eingesetzten Zerspanwerkzeuge immer filigraner auszubilden, was sich insbesondere negativ auf die Taktzeit, die Haltbarkeit des Werkzeugs sowie die Qualitätsanforderungen auswirkt.

Die vorliegende Erfindung beschäftigt sich deshalb mit dem Problem, für ein Verfahren der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, erstmals Ringnuten in Kolben einer Brennkraftmaschine nicht mehr durch Zerspanen herzustellen, sondern ausschließlich durch Schleifen. Das Schleifen ermöglicht dabei nicht nur deutlich geringere Nutbreiten, sondern auch eine deutlich gesteigerte Qualität hinsichtlich einer Oberflächenbeschaffenheit. Somit steigt sowohl die Oberflächengüte, was positive Auswirkungen auf die Funktionalität der Kolbenringe hat, als auch die Qualität hinsichtlich der Kurz- bzw. Langwelligkeit. Unter den Begriffen Kurzwelligkeit bzw. Langwelligkeit werden Abweichungen von einer definierten Planheit verstanden. Kurzwelligkeit entsteht dabei durch ein "Zittern" des sich drehenden, spanenden Werkzeugs bzw. Werkstücks, während Langwelligkeit eher durch eine unrunde Lagerung des sich drehenden Zerspanungswerkzeugs bzw. des Werkstücks entsteht. Von besonderem Vorteil bei einem Schleifen der Ringnuten ins Volle, das heißt in ein massives Material, ist dabei darüber hinaus, dass auch unterbrochene Schnitte, die bspw. durch ein Einbringen von Öldrainagebohrungen entstehen, nicht mehr wie bisher negativen Einfluss auf die Qualität haben. Derartige Öldrainagebohrungen, welche im Bereich der späteren Ringnut angeordnet sind, können bei einer Herstellung der Ringnut mittels Zerspanen die Welligkeit negativ beeinflussen. Bei dem erfindungsgemäßen Schleifen der zumindest einen Ringnut ins Volle hingegen, werden derartige Öldrainagebohrungen einfach überschliffen, ohne dass dabei Grate entstehen können. Besonders in Bezug auf Grate bietet das erfindungsgemäße Schleifen der Ringnut erhebliche Vorteile im Hinblick auf eine Bauteilsauberkeit. Bei dem erfindungsgemäßen Einschleifen der Ringnuten ist es zudem unerheblich, wie hart das Material des Kolbens ist und ob unter Umständen unterschiedlich hartes Gefüge im Bereich der herzustellenden Ringnut vorliegt, bspw. im Bereich von Schweißzonen, was ebenfalls einen großen Vorteil bezüglich der Qualität der herzustellenden Ringnut bietet. Rein theoretisch könnte natürlich auch ein zumindest geringfügiges Vorstechen der Nuten mit anschließendem Schleifen vorgesehen werden.

Bei einer vorteilhaften Weiterbildung der erfindungsgemäßen Lösung, wird die zumindest eine Ringnut durch ein rotierendes Schleifwerkzeug mit einer Schleifscheibe eingebracht. Der Kolben kann dabei während des Schleifens fixiert sein oder alternativ um seine Kolbenachse gedreht werden. Besonders ein gleichzeitiges und gleichsinniges Drehen des Kolbens in Bezug auf die Schleifscheibe (beide im Uhrzeigersinn oder entgegen) ermöglicht ein vergleichsweise schnelles Einschleifen der zumindest einen Ringnut. Selbstverständlich ist dabei auch denkbar, dass entweder die Schleifscheibe oder der Kolben fest eingespannt wird und lediglich der gegenüberliegende Part, das heißt der Kolben oder die Schleifscheibe gedreht wird. Auf diese Weise ist eine besonders hohe Qualität in Bezug auf Rundheit und Planheit möglich. Es ist dabei selbstverständlich auch denkbar, dass beide Komponenten (Kolben und Schleifwerkzeug) in gegenläufige Richtung drehen, dann aber mit unterschiedlicher Drehgeschwindigkeit, um noch einen Schleifeffekt zu erhalten.

Bei einer weiteren vorteilhaften Ausführungsform der erfindungsgemäßen Lösung werden unterschiedliche Schleifscheiben mit unterschiedlichen Querschnitten verwendet, so dass die eingeschliffenen Ringnuten unterschiedliche Nutgeometrien aufweisen. Mit dem erfindungsgemäßen ausschließlichen Einschleifen der Ringnuten ist es erstmals möglich auch sehr schmale und tiefe Ringnuten herzustellen bzw. durch eine entsprechende Querschnittsform der verwendeten Schleifscheibe auch eine Ringnut mit schräg zueinander verlaufenden Nutwänden herzustellen. Prinzipiell sind dabei der mittels der Schleifscheibe herzustellenden Nutgeometrie nahezu keine Grenzen gesetzt.

Zweckmäßig wird ein Schleifwerkzeug mit zumindest zwei parallelen Schleifscheiben verwendet, mit denen mindestens zwei parallele Ringnuten gleichzeitig eingeschliffen werden. Durch das Verwenden eines derartigen Schleifwerkzeugs mit zumindest zwei, vorzugsweise drei oder vier parallelen Schleifscheiben, können im günstigsten Falle sämtliche erforderliche Ringnuten im Kolben gleichzeitig eingeschliffen werden, wodurch eine erhebliche Reduzierung der Taktzeit und damit auch eine erhebliche Reduzierung der Herstellungskosten möglich ist.

Zweckmäßig weisen die zumindest zwei Schleifscheiben einen identischen oder einen unterschiedlichen Querschnitt auf, so dass hiermit identische Ringnuten oder Ringnuten mit unterschiedlichen Nutgeometrien gleichzeitig eingeschliffen werden können. Durch eine entsprechende Anordnung und Auswahl der Schleifscheiben des Schleifwerkzeugs, lässt sich somit eine Ringpartie vorzugsweise in einem einzigen Schleifarbeitsgang herstellen und zwar je nach Wunsch mit unterschiedlichen oder identischen Nutgeometrien.

Bei einer weiteren vorteilhaften Ausführungsform der erfindungsgemäßen Lösung weisen die zumindest zwei Schleifscheiben einen identischen oder einen unterschiedlichen Durchmesser auf, wodurch identische Ringnuten oder Ringnuten mit unterschiedlicher Nuttiefe gleichzeitig eingeschliffen werden können. Durch eine entsprechende Ausbildung der einzelnen Schleifscheiben ist es somit möglich, mehrere Nuten mit unterschiedlicher oder gleicher Nuttiefe gleichzeitig herzustellen.

Bei einer weiteren vorteilhaften Ausführungsform der erfindungsgemäßen Lösung verlaufen eine Rotationsachse der Schleifscheibe und eine Kolbenachse während des Schleifens der zumindest einen Ringnut parallel oder schräg zueinander. Zusätzlich zu der gewählten Querschnittsform der einzelnen Schleifscheiben in ihrem außenliegenden Schleifkranz, kann eine entsprechende Nutgeometrie auch durch eine entsprechende Neigung der Rotationsachse der Schleifscheibe bzw. der Schleifscheiben hergestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: einen erfindungsgemäßen Kolben in einer Seitenansicht bei der Durchführung eines erfindungsgemäßen Verfahrens, bei welchem zumindest eine Ringnut durch Schleifen eingebracht wird,
- Fig. 2: eine Darstellung wie in Fig. 1, jedoch bei einer Schrägansicht,
- Fig. 3: eine Darstellung wie in Fig. 1, jedoch bei einer Draufsicht,
- Fig. 4: eine Darstellung wie in Fig. 1, jedoch bei einer Schnittansicht,
- Fig. 5: eine Detaildarstellung aus Fig.1.

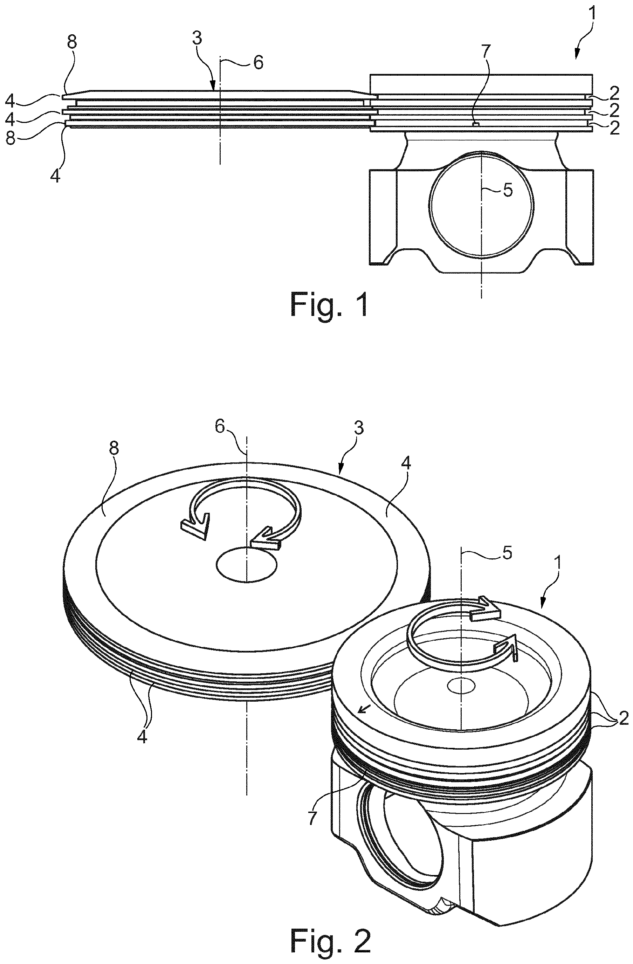

Entsprechend den Fig. 1 bis 5, wird bei einem erfindungsgemäßen Verfahren zur Bearbeitung eines Kolbens 1 einer im Übrigen nicht gezeigten Brennkraftmaschine, zumindest eine Ringnut 2 ausschließlich durch Schleifen eingebracht. Die Ringnut 2 dient dabei im Betrieb des Kolbens 1 zur Lagerung eines nicht gezeigten Kolbenrings, der in der Ringnut 2 aufgenommen ist. Durch das erfindungsgemäße Einbringen der zumindest einen Ringnut 2 ausschließlich durch Schleifen, lassen sich sämtliche bislang bei einem zerspanenden Verfahren auftretenden Nachteile überwinden. Beim Einschleifen der Ringnuten 2 in das volle Material des Kolbens 1 lassen sich insbesondere auch geringe Nutbreiten, bspw. im Bereich von 1,5mm oder weniger mit gleichzeitig höchster Qualität herstellen, die in diesen geringen Dimensionen mit bisherigen Zerspanungswerkzeugen nicht herstellbar waren. Gerade der zunehmende Trend hin zu immer schmaleren Ringnuten 2 von 1,5mm und kleiner, begünstigt den Einsatz des erfindungsgemäßen Verfahrens.

Bei dem erfindungsgemäßen Verfahren wird die zumindest eine Ringnut 2 bspw. durch ein rotierendes Schleifwerkzeug 3 mit zumindest einer Schleifscheibe 4 mit entsprechendem Schleifkranz 8 eingebracht. Der Kolben 1 kann dabei während des Schleifens fixiert sein oder aber um seine Kolbenachse 5 gedreht werden. In gleicher Weise ist es auch denkbar, dass das Schleifwerkzeug 3 mit seiner Schleifscheibe 4 während des Verfahrens um seine Rotationsachse 6 gedreht wird oder aber feststeht. Zumindest einer der beiden Schleifpartner, das heißt das Schleifwerkzeug 3 oder der Kolben 1 müssen sich jedoch zum Einschleifen der zumindest einen Ringnut 2 drehen. In bevorzugter Weise wird dabei der Kolben 1 in die eine Richtung gedreht und gleichzeitig das Schleifwerkzeug 2 in die dieselbe Richtung, wodurch sich die Bearbeitungszeit und damit auch die Herstellungskosten deutlich reduzieren lassen. Es ist selbstverständlich auch denkbar, dass das Schleifwerkzeug 3 bzw. der Kolben 1 fest eingespannt sind und der andere Teil, das heißt der Kolben 1 oder das Schleifwerkzeug 3 gedreht wird, wodurch sich eine besonders hohe Qualität in Bezug auf Rundheit und Planheit ergibt. In den Figuren ist ersichtlich, dass sich der Kolben 1 und das Schleifwerkzeug 3 in beide (Dreh-)Richtungen bewegen können. Somit ist es zu den beschriebenen Möglichkeiten auch möglich, im Gleichlauf (beide Achsen rotieren in dieselbe Richtung) oder im Gegenlauf (die Achsen rotieren in unterschiedliche Richtungen) zu schleifen.

Durch das erfindungsgemäße ausschließliche Einbringen der zumindest einen Ringnut 2 durch Schleifen ist es auch unerheblich, wie hart das Material des Kolbens 1 ist und ob es innerhalb des Kolbens 1, z. Bsp. im Bereich von Schweißzonen, unterschiedlich harte Gefüge gibt. Bei dem erfindungsgemäßen Verfahren wird dabei ins Volle geschliffen, das heißt die herzustellende Ringnut 2 wird also in keiner Weise vorgestochen oder vorgefertigt.

Betrachtet man die Fig. 1 bis 3, so kann man erkennen, dass das Schleifwerkzeug 3 jeweils drei Schleifscheiben 4 aufweist, die zudem eine unterschiedliche Querschnittsform aufweisen, so dass mit einem derartigen Schleifwerkzeug 3 sämtliche in den Kolben 1 einzubringende Ringnuten 2 gleichzeitig eingeschliffen werden können, was die Taktzeit und damit auch die Herstellungskosten reduziert. Ein großer Vorteil bei dem erfindungsgemäßen Verfahren besteht darin, dass beim Schleifen keinerlei Grate entstehen, welche sich hingegen beim Zerspanen ergeben und negative Auswirkungen auf die Bauteilsauberkeit haben.

Durch eine unterschiedliche Ausführungsform der einzelnen im Schleifwerkzeug 3 kombinierten Schleifscheiben 4 lassen sich auch Ringnuten 2 mit unterschiedlichen Nutgeometrien gleichzeitig herstellen. Durch die Verwendung von identischen Schleifscheiben 4 können identische Ringnuten 2 gleichzeitig hergestellt werden.

Verwendet man bspw. Schleifscheiben 4 mit identischen oder unterschiedlichen Durchmessern, so ist auch das Herstellen von identischen Ringnuten 2 oder Ringnuten 2 mit unterschiedlichen Nuttiefen t gleichzeitig möglich.

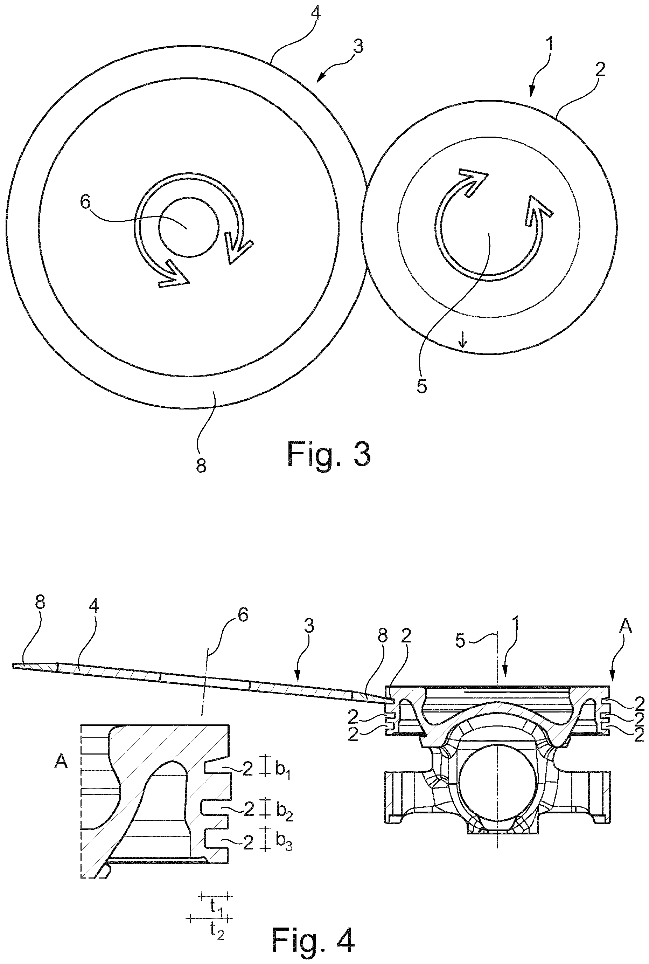

Ein Kolben 1 mit Ringnuten 2 mit unterschiedlicher Nuttiefe t₁, t₂, und unterschiedlicher Nutbreite b₁, b₂, b₃ ist beispielsweise in der Schnittdarstellung in Fig. 4 und in der dort gezeigten Detaildarstellung A gezeigt. Die in der Detaildarstellung A oberste Ringnut 2 kann dabei mit schräg gestellter Schleifscheibe 4 geschliffen werden oder aber mit einer Schleifscheibe 4, deren Schleifkranz 8 eine konische Form hat. Im letzten Fall könnten die einzelnen Ringnuten 2, obwohl sie eine unterschiedliche Querschnittsform, eine unterschiedliche Nutbreite b und eine unterschiedliche Nuttiefe t aufweisen, mit einem Schleifwerkzeug 3 mit hinsichtlich ihrer Form, ihrer Breite und ihres Durchmessers unterschiedlichen Schleifscheiben 4 gleichzeitig geschliffen werden.

Die Rotationsachse 6 der Schleifscheibe 4 bzw. des Schleifwerkzeugs 3 und die Kolbenachse 5 verlaufen dabei vorzugsweise parallel zueinander (vgl. die Fig. 1 bis 3), können aber auch schräg zueinander verlaufen, wie dies bspw. gemäß der Fig. 4 dargestellt ist. Durch eine entsprechende Neigung der Rotationsachse 6 lassen sich mit ein und derselben Schleifscheibe 4 unterschiedliche Nutgeometrien in den Kolben 1 einbringen.

Vor dem Einschleifen der zumindest einen Ringnut 2 kann auch noch eine Öldrainagebohrung 7 (vgl. Fig. 1) eingebracht werden, wobei beim späteren Einschleifen der die Öldrainagebohrung 7 überfahrenden Ringnut 2 keinerlei Grate im Bereich der Öldrainagebohrung 7 entstehen, was bei einem spanenden Herstellen der Ringnut 2 nicht möglich wäre.

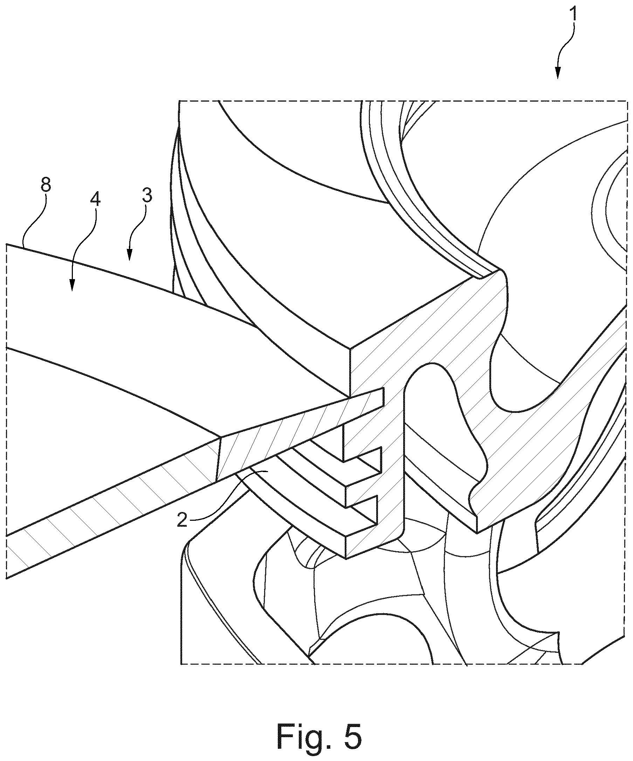

Mit dem erfindungsgemäßen ausschließlichen Schleifen der Ringnuten 2 mittels eines entsprechenden Schleifwerkzeugs 3 lassen sich nicht nur Nuten 2 mit deutlich geringerer Nutbreite b herstellen, sondern gleichzeitig wird auch die Qualität der hergestellten Ringnuten 2 deutlich erhöht. So steigt bspw. sowohl die Oberflächengüte, was positive Auswirkungen auf die Funktionalität der Kolbenringe hat, als auch die Qualität hinsichtlich der Kurz- bzw. Langwelligkeit. Auch unrunde Schnitte, wie bspw. durch Öldrainagebohrungen 7 haben beim erfindungsgemäßen Einschleifen der Ringnuten 2 nicht mehr den Einfluss auf die Qualität wie bislang. Zudem ergeben sich auch keine Nachteile hinsichtlich der Bearbeitbarkeit von schrägen Ringnuten 2 (Tellernuten), wie bspw. in Fig. 4 und 5 dargestellt, wobei aufgrund des praktisch frei wählbaren Werkzeugdesigns der Schleifscheiben 4 eine Nutgeometrie extrem variabel ist.

Mit dem erfindungsgemäßen Einschleifen der Ringnuten 2 in das volle Material des Kolbens 1, lassen sich somit qualitativ höchstwertige Ringnuten 2 kostengünstig und schnell herstellen, wobei zugleich deutlich geringere Nutbreiten bmöglich sind.

## Patentansprüche

1. Verfahren zur Bearbeitung eines Kolbens (1) einer Brennkraftmaschine, bei dem zumindest eine Ringnut (2) eingebracht wird,
**dadurch gekennzeichnet,**
**dass** die zumindest eine Ringnut (2) ausschließlich durch Schleifen eingebracht wird.

2. Verfahren nach Anspruch 1,
**dadurch gekennzeichnet,**
**dass** die zumindest eine Ringnut (2) durch ein rotierendes Schleifwerkzeug (3) mit zumindest einer Schleifscheibe (4) eingebracht wird.

3. Verfahren nach Anspruch 1 oder 2,
**dadurch gekennzeichnet,**
**dass** der Kolben (1) während des Schleifens fixiert oder um seine Kolbenachse (5) gedreht wird.

4. Verfahren nach einem der Ansprüche 1 bis 3,
**dadurch gekennzeichnet,**
**dass** unterschiedliche Schleifscheiben (4) mit unterschiedlichen Querschnitten verwendet werden, so dass die damit eingeschliffenen Ringnuten (2) unterschiedliche Nutgeometrien aufweisen.

5. Verfahren nach einem der Ansprüche 1 bis 4,
**dadurch gekennzeichnet,**
**dass** ein Schleifwerkzeug (3) mit zumindest zwei parallelen Schleifscheiben (4) verwendet wird, mittels denen zumindest zwei parallele Ringnuten (2) gleichzeitig eingeschliffen werden.

6. Verfahren nach Anspruch 5,
**dadurch gekennzeichnet,**
**dass** ein Schleifwerkzeug (3) mit zumindest zwei Schleifscheiben (4) mit identischen oder unterschiedlichen Querschnitten verwendet wird und so identische Ringnuten (2) oder Ringnuten (2) mit unterschiedlichen Nutgeometrien gleichzeitig eingeschliffen werden.

7. Verfahren nach Anspruch 5 oder 6,
**dadurch gekennzeichnet,**
**dass** ein Schleifwerkzeug (3) mit zumindest zwei Schleifscheiben (4) mit identischen oder unterschiedlichen Durchmessern verwendet wird und so identische Ringnuten (2) oder Ringnuten (2) mit unterschiedlichen Nuttiefen gleichzeitig eingeschliffen werden.

8. Verfahren nach einem der Ansprüche 2 bis 7,
**dadurch gekennzeichnet,**
**dass** eine Rotationsachse (6) der Schleifscheibe (4) und eine Kolbenachse (5) während des Schleifens der zumindest einen Ringnut (2) parallel oder schräg zueinander verlaufen.

9. Verfahren nach einem der Ansprüche 2 bis 8,
**dadurch gekennzeichnet,**
**dass** zumindest eine Schleifscheibe (4) einen sich nach außen verjüngenden Rand aufweist, mit dem eine Ringnut (2) mit schräg zueinander verlaufenden Nutwänden eingeschliffen wird.

10. Verfahren nach einem der Ansprüche 1 bis 9,
**dadurch gekennzeichnet,**
**dass** vor dem Einschleifen der zumindest einen Ringnut (2) zumindest eine Öldrainagebohrung (7) im Bereich der späteren Ringnut (2) eingebacht wird.

11. Verfahren nach Anspruch 10,
**dadurch gekennzeichnet,**
**dass** zumindest zwei Öldrainagebohrungen (7) im Bereich der späteren Ringnut (2) eingebracht werden.

12. Verfahren nach einem der vorhergehenden Ansprüche,
**dadurch gekennzeichnet,**
**dass** die zumindest eine Ringnut (2) mit einer maximalen Nutbreite (b) von 1,5 mm ausschließlich durch Schleifen eingebracht wird.

13. Kolben (1), bearbeitet nach dem Verfahren nach einem der Ansprüche 1 bis 12.
